# EUROPEAN PATENT APPLICATION

(11) **EP 1 426 166 A2**
(43) Date of publication of application: **09.06.2004**
(21) Application number: 03380104.4
(22) Date of filing: 30.04.2003
(51) Int. Cl.: B29C 65/00, B29C 65/74, B60J 10/00, B29K 21/00

(54) **A method for manufacturing rubber weather stripping**

(30) Priority: 04.12.2002 ES 200202788
(71) Applicant: Boss Auto Import, S.A., 08007 Barcelona (ES)
(72) Inventor: Garro, Manuel Tarter, 08007 Barcelona (ES)

(57) **Abstract**

The machine (2) is fed with rubber mesh (1) that has ducts (3) all along the run, which expel air in order to ensure the rubber mesh slides along smoothly inside the machine. A system of bevelled blades (4) separated from each other by semicircular shaped grooves (5) apply pressure to the mesh when it passes over a metal roller (6) that has semicircular grooves on its surface (7) that coincide exactly with those of the upper part (5). The cavity created between both makes a perfectly round cut across the foam rubber, and welded seams (8) along the whole of its length. A nozzle system releases the glue (9) at a high temperature. A double winding system (10) that inserts the hubs (11) alternately into the axes (12) performs the rewinding operation, without the process having to be stopped and once completed, the weather stripping is packaged in cases (13) that are equipped with special parts (14).

## Description

### OBJECT OF THE INVENTION

The object of this Patent application is an innovative method for manufacturing perfectly circular weather stripping made of plastic rubber, polyurethane foam or a similar product.

This weather stripping would be shaped by a cold welding process applied to rubber mesh or blocks of different widths and thickness, by means of a practical technique for the production and manufacture of rubber strips several metres long, of the kind normally used as a filling material in automobile body workshops for filling in gaps between doors, car bonnets, car boots, etc. in paint spraying processes. The invention could also be used for other purposes.

The method for manufacturing the rubber weather stripping affords several advantages to the function for which it is intended (these advantages will be described later in this document), as well as other advantages that are inherent in its organization and constitution.

### ANTECEDENTS TO THE INVENTION

At the present time, and with reference to the state of the art, we should say that antecedents exist with respect to the production of similar articles with curved surfaces, which have been obtained by cutting or sculpting rubber or foam rubber mesh or blocks, or by first shaping a mesh of rubber or foam rubber by folding and pressing (for example, in a mould), and then gluing a second mesh of rubber or foam rubber on to the pre-shaped rubber. The gluing phase can be performed by using the technique of impregnating the rubber mesh with an adhesive, by welding, by applying heat, by ultrasound, etc.

An antecedent of the cold welding process is also known, which is performed when the rubber or foam rubber is melted down after being cut under pressure, giving rise to a welded seam. It has been ascertained that cold welding using revolving blades can be used to manufacture a wide range of longitudinal, shaped articles of any length, from rubber or foam rubber mesh.

However, in this particular case, none of the methods known to date has managed to obtain perfectly circular weather stripping, and this quality has undoubted advantages over others, in terms of application, use and savings in production, with the ensuing economy in that the method implies less product waste during the manufacturing process.

### DESCRIPTION OF THE INVENTION

The applicant of the present Patent has designed a method for manufacturing weather stripping that manages to shape long strips with a curved surface from a rubber or foam rubber mesh or block, in a great variety of widths and thickness. The cross section of these strips is perfectly circular in shape, and is achieved by a cold welding process, with two welded seams running lengthwise along the strips.

The cold welding phase is done by blades, the tips of which have been bevelled on both sides, which are parallel to each other, with a space or groove formed between them, that is semicircular in shape. The blades, which are applied to the rubber mesh at a specific pressure, operate on a steel roller with semicircular grooves that coincide with the spaces between the blades, and this cutting unit is fed with rubber mesh that is fed continually by the device of the machine herein described.

This method has an exclusive innovative feature, which is its double blades system that is worth mentioning, due to the following innovative performance rendered by these blades:

The pressure applied is generated by hydraulic pistons, which means that the pressure is distributed equally through all the areas submitted to the cold welding process. This innovative method means that when the shaped rubber strips are separated afterwards (the weather stripping is stored in rolls that dispense several strips, and one or several can be used at a time), this is done applying the same degree of precision and reliability, no matter where the position of the strip in the roll.

The double blades method creates two cavities in the shape of a semi-circumference. Once the foam rubber has passed through this double cavity, a perfectly round section of foam rubber is obtained, since it is impossible for the cold welding process to be applied on a flat surface. This non-ovoid shape improves the result of the application, as.it adapts more evenly to cavities, gaps and grooves over which it is normally applied.

To ensure that the foam rubber strip slides smoothly through the machine, the manufacturing process is improved upon by applying air from the bottom to the top along the different stretches of the run, which acts on the rubber strip by means of a revolving rubber band with many holes. This air intake means that the foam rubber never stops during any stage of its passage through the machine, and this contributes to obtaining an excellent performance, since it prevents unnecessary stoppages that may be necessary for correcting the path of the foam rubber, or the foam rubber from stopping when it touches the sides or lower part of the conveyor belt.

Once the strips have been shaped, the adhesive is applied. The method for applying the adhesive adds another considerable advantage to the process. The application of the adhesive is done by nozzles that release the glue at a high temperature, and spread it evenly throughout most of the semi-circumferences that make up the circular foam rubber strip. If required, this layer of glue can be applied to a much narrower part of the rubber strip, with the ensuing savings. Maintaining the gluing method at a specific temperature makes it possible to speed up the weather stripping production process, and at the same time, guarantees proper, even adhesion in the area to be treated.

The finishing touch to the manufacturing process is carried out by an innovative double reel method, that permits the flow of the manufactured product to be assimilated without the process having to be stopped at any time. The silicone-coated cardboard hubs used to wind the weather stripping are inserted into the axes manually, and the machine automatically alternates between one winder and the other, slightly modifying the path of the roll of shaped weather stripping so that the direction of the belts is centred, and above all, ensures that pressure is applied evenly during the whole of the winding process, in order to prevent the adhesive from being transferred during the last few turns of the roll, as a result of having to support excess weight arising from the outermost turns of the product, in the case that the pressure is not evenly distributed.

Finally, after being grouped together and duly rolled on to the cardboard hubs, the weather stripping strips are packed in cases with a cardboard part that is used as a support to make it easier to dispense the product.

To complete the description given below, and with the intention of gaining a better understanding of its characteristics, a set of drawings has been attached to this descriptive record, the figures of which show the most significant details of the invention as an illustration, but which is by no means exhaustive.

### BRIEF DESCRIPTION OF THE DESIGNS

Figure 1.- Cross section view of the rubber mesh at the initial stage.
Figure 2.- Cross section view of the rubber mesh being welded by the blades.
Figure 3.- Cross section view of the shaped rubber weather stripping.
Figure 4.- Cross section view of the shaped weather stripping equipped with the adhesive strip.
Figure 5.- View of the machine area where the welding operation is performed.
Figure 6.- View of the air intakes of the machine.
Figure 7.- View of the machine area where the weather stripping is rolled.
Figure 8.- View of the packaging.

### DESCRIPTION OF THE RECOMMENDED OPERATION

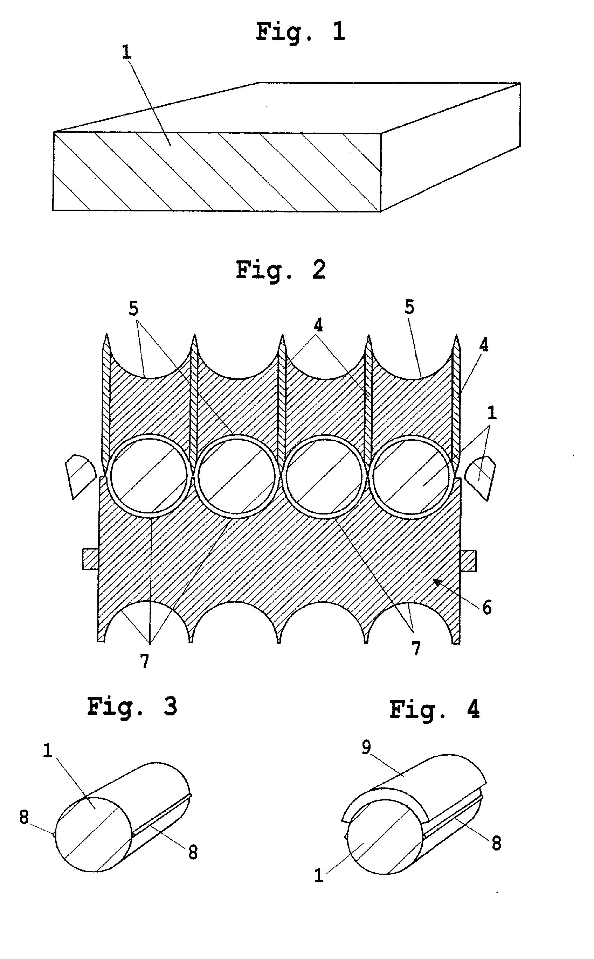

After examining the figures commented upon above, and in accordance with the numbering system, a recommended method for putting the invention into practice can be seen, which is, however, not exhaustive. This consists of a method for manufacturing rubber weather stripping (1) in which, in principle, there is no compression of the rubber mesh or block, as can be observed in figure 1, and which may be of different sizes and thickness.

The machine is fed (2) with rubber mesh (1) by means of normal roller methods as well as other methods, that have several ducts (3) in order to ensure it slides smoothly through the machine. These ducts are placed along several stretches of the run, and air is expelled upwards, acting on the rubber strip by means of a revolving rubber band with holes (Figure 6).

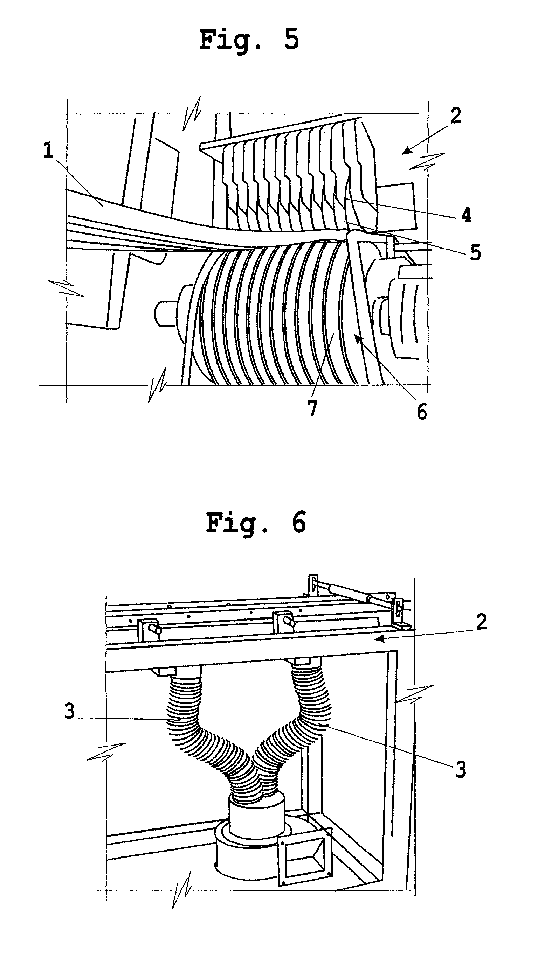

As can be seen in figures 2 and 5, a method of blades (4) separated from each other by semicircular grooves (5) apply pressure by means of hydraulic pistons to the rubber mesh (1), when it passes over a metal roller (6), the surface of which has a series of grooves (7) running perpendicular to the direction of the turn. These grooves are semicircular in shape, and coincide exactly with the grooves (5) of the upper part. This method creates two cavities in the shape of a semi-circumference that make a perfectly round cut through the foam rubber, and the pressure is furthermore distributed equally throughout all the areas submitted to the cold welding process, thus ensuring that when the strips are separated later, this operation is done with the same degree of precision and reliability along the whole length.

The lower end of the blades (4) is bevelled to make a perfectly circular shape when cutting across the weather stripping (1), as can be observed in figure 3, and the stripping has welded seams (8) all along its length. The thickness of the weather stripping (1) is greater at the welded seams (8), and it is thinner at the areas further away from the seams, as a result of the pressure applied.

The adhesive is then applied, using nozzles that release the glue (9) at a high temperature, and distribute it evenly over most of the surface of one of the semi-circumferences making up the circular foam rubber strip, as can be seen in figure 4, which adds a considerable improvement to the whole process. Furthermore, the method of maintaining the temperature of the gluing process makes it possible to speed up the weather stripping production process, thereby guaranteeing that the glue is spread evenly and properly over the area to be treated.

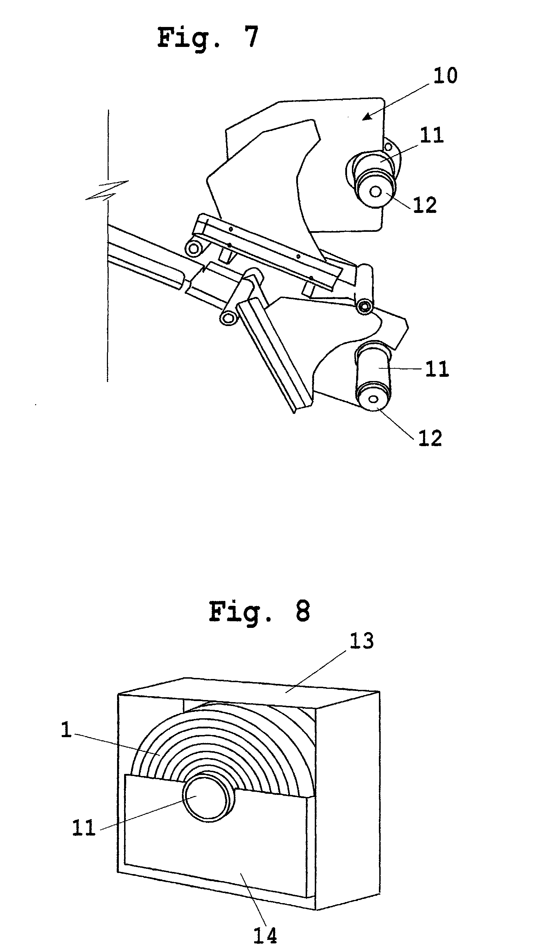

The process is completed by a double winding method (10) as shown in figure 7, that enables the manufactured product to be assimilated by the machine (2) without the process having to be stopped at any time. The silicone-coated cardboard hubs (1) are inserted into the axes (12) manually, and the machine automatically alternates between one reel and the other, slightly modifying the path of the shaped weather stripping roll so that the direction of the belts is centred and an even pressure is applied during the whole of the winding process, thereby preventing the adhesive from being transferred during the last few turns of the roll, due to the uneven distribution of pressure.

Once finished, the weather stripping rolls (1) are packed in cases (13) which have a cardboard part (14) inside them in order for them to be easily removed, and which also serve as a support for the cardboard hub (Figure 8).

In terms of its essential function, this invention could be put into practice using other operating methods that are different to the one indicated as an example in the description, which would also obtain the protection requested herein. The method could thus be built in any shape and size, using the most appropriate materials and means, since this is all included within the essence of the claims.

## Claims

1. A method for manufacturing rubber weather stripping, which is **characterised** essentially by the fact that the machine (2) is able to make rubber weather stripping (1) from a block of mesh of plastic rubber or foam rubber, by means of a cold welding process. This weather stripping is produced in the form of a long strip, the cross section of which is perfectly round in shape.

2. A method for manufacturing rubber weather stripping as described in claim 1, **characterised by** the fact that the machine (2) has several ducts (3) along various stretches of the run that expel air upwards, acting on the foam rubber strip by means of a revolving rubber band with holes.

3. A method for manufacturing rubber weather stripping as described in claims 1 and 2 above, **characterised by** the fact that a system of blades (4) that are laid parallel to each other and separated from each other by semicircular grooves (5) apply pressure to the rubber mesh (1) by means of hydraulic pistons, when the mesh passes over a metal roller (6) that has semicircular grooves (7) that coincide exactly with the grooves of the blades (4).

4. A method for manufacturing rubber weather stripping as described in the above claims, **characterised by** the fact that the space created between the grooves (5) and (6) make a perfectly round cut in the foam rubber, and by the fact that the pressure applied by the rollers (4) is distributed equally throughout all the areas submitted to the cold welding process, so that when separating the strips later, this operation can be done with the same degree of precision and reliability along the whole length.

5. A method for manufacturing rubber weather stripping, as described in the above claims, **characterised by** the fact that the lower end of the blades (4) is bevelled and by the fact that the weather stripping produced has welded seams along its whole length (8) at both sides.

6. A method for manufacturing rubber weather stripping as described in the above claims, **characterised by** the fact that the application of the adhesive on the weather stripping surface is done by nozzles that release the glue (9) at a high temperature, and spread it evenly over one of the semi-circumferences that form the circular foam rubber strip, and by the fact that the system of maintaining the temperature enables the production process to be speeded up.

7. A method for manufacturing rubber weather stripping as described in the above claims, **characterised by** the fact that a double winding system (10) enables the manufactured product to be assimilated by the machine (2) without the process having to be stopped, and by the fact that the cardboard hubs (11) used to wind the weather stripping are inserted into the axes (12) manually, and the machine automatically alternates between both, slightly modifying the path of the shaped roll, in order to centre the direction of the belts and ensure that pressure is applied evenly.

8. A method for manufacturing rubber weather stripping, as described in the above claims, **characterised by** the fact that the cases (13) in which the rolls of weather stripping are packed, once the process has been completed, are equipped with a cardboard part (14) inside them, that serves as a support for the silicone-coated cardboard hub.
